Europäisches Patentamt

European Patent Office

Office européen des brevets

(11) Publication number: **0 114 585**
**A2**

(12) **EUROPEAN PATENT APPLICATION**

(21) Application number: **83830283.4**

(22) Date of filing: **27.12.83**

(51) Int. Cl.³: **B 60 K 15/02**

(30) Priority: **24.01.83 IT 2058483 U**
**24.01.83 IT 2058583 U**
**24.01.83 IT 2058683 U**

(43) Date of publication of application:
**01.08.84 Bulletin 84/31**

(84) Designated Contracting States:
**AT BE CH DE FR GB LI LU NL SE**

(71) Applicant: **TEBALDI S.r.l.**
**Via Maggiolino 9**
**I-20052 Monza (Milano)(IT)**

(72) Inventor: **Lupieri, Giorgio**
**Via Randaccio 5**
**I-20052 Monza (Milan)(IT)**

(74) Representative: **Calvani, Domenico**
**UFFICIO BREVETTI ING. CALVANI, SALVI & VERONELLI**
**4, Piazza Duca d'Aosta**
**I-20124 Milan(IT)**

(54) **Portable fuel tank structure for outboard motors.**

(57) A portable fuel tank structure (1) for outboard motors having a transport handle (8) located on a smaller side wall (6) thereof, a tank filler (12) and a fuel supply pipe (14), wherein the tank filler (12) is positioned close to said transport handle (8) so as to permit the fuel tank (1), when it is in a full condition, to be transported in a vertical position without fuel leakage. The filler (12) is arranged in an inclined position with respect to the longitudinal axis of the fuel tank (1). Also the fuel supply pipe (14) is positioned close to the tank filler (12) and arranged in an inclined position. The filler (12) and the fuel supply pipe (14) can be integrally molded in a single molding operation so as to form an assembly (20) to be secured to the fuel tank (1) as a single piece. The tank structure also provides means (16) for securing the fuel tank to the hull of a motor-boat and means (38-39) for preventing it from moving on the hull.

EP 0 114 585 A2

./...

*fig.1*

PORTABLE FUEL TANK STRUCTURE FOR

OUTBOARD MOTORS

Applicant: TEBALDI S.r.l., MONZA (Milan), Italy.

This invention relates generally to fuel tanks
for outboard motors of motor-boats or the like and more
particularly to an improved structure of these fuel tanks
of portable type.

As known, portable fuel tanks for outboard motors,
i.e. fuel tanks removably attached to the motors, have
been successfull on the market in the last years, because
they permit the refueling to be made in any filling station.

These portable fuel tanks which are substantially
parallelepipedal in shape, with the greater opposite surfaces being referred to as top and bottom walls, respectively, are located on a boat hull portion near the motor
and are connected thereto by means of a fuel hose. For a
good stability they are placed on the hull receiving portion with their bottom wall, whereas on this opposite wall,
i.e. the top wall, they are provided with a tank filler
closed by a conventional filler cap and usually located
at the center of the top wall, as well as with a fuel
supply pipe to be connected to the outboard motor and,
if necessary, with a fuel level gauge.

In order to apply these elements to the fuel tanks,
the top w-all thereof is to be drilled and since these elements are usually located in different positions for handling and visual checking convenience, a plurality of holes must be provided into the top wall of fuel tank, at least as many holes as the elements to be applied are. More than one drilling operation are needed for applying all the different elements, with the result that the fuel tank becomes very expensive.

These portable fuel tanks are also provided with a transport handle located either at the center portion of the top wall or, preferably, on a side wall of the tank in order to make the transport thereof easier.

Tipically, a portable fuel tank provided with a transport handle on a side wall and with the filler in a center area of the top wall thereof, is disposed, in use, with its longitudinal axis horizontally directed, but during the transport, this axis will be vertically directed, so that there is the drawback that when the fuel tank is in a full condition, fuel leakage can occur through the filler cap, provided the fuel tank will be transported in a horizontal position, which, however, is very uncomfortable.

Another disadvantage is that these fuel tanks having the filler located on their top wall, must be filled in a horizontal position in order to assure their partial filling in accordance with the existing specifications.

Still another disadvantage is that when the fuel tank is disposed in a full condition on the hull portion intended to receive it, movements thereof can occur due to the rolling and pitching movements of the boat.

The present invention aims to obviate these and other disadvantages by providing a portable fuel tank for outboard motors, having a structure permitting it to be readily filled and at the same time to be easily transported without

- 2 -

fuel leakage  through the filler cap.

It is another object of the present invention to provide a fuel tank of the above mentioned type, the structure of which permits it to be filled both in a horizontal and in a vertical position and which can be used in both positions.

It is another object of the present invention to provide a fuel tank of the above mentioned type having such a structure as to permit it to be secured to the hull portion intended to receive it.

More particularly, the portable fuel tank for outboard motors having a transport handle located on one of its smaller sides, a filler and a fuel supply pipe is characterized in that the tank filler is positioned in a location close to the handle so as to permit the fuel tank to be transported, when in a full condition, in a vertical position without any fuel leakage through the filler cap.

According to a feature of the present invention the tank filler is positioned in an inclined position with respect to the tank longitudinal axis in order to permit the fuel tank to be transported in a vertical position and to be filled in a horizontal and a vertical position.

According to another feature of the invention, also the fuel supply pipe is positioned close to the filler, preferably in an inclined position, in order to permit the fuel tank to be transported, filled and used both in a horizontal position and in a vertical position.

Alternatively, the fuel supply pipe and the tank filler are integrally formed on a supporting plate as a separate assembly intended to be tightly secured on the tank wall and having means for securing it in a location of the fuel tank where an opening having such a size as to receive the filler and fuel supply pipe openings has been first provided.

According to still another feature of the invention the supporting plate is also provided with a seat for housing a fuel level gauge, positioned between filler and fuel supply pipe.

According to a further feature of the invention the fuel supply pipe is provided with a suction pipe extending inside the tank to reach a corner thereof opposite the corner where the fuel supply pipe is applied in order to drain as more as possible the fuel in the tank.

According to another feature of the present invention, the f-uel tank is provided with hooking means for securing it to the hull portion intended to receive it, so as to prevent dangerous movements thereof caused by the hull movements.

Alternatively, the fuel tank structure comprises supporting and retaining means formed of a peripheral rim depending from the tank bottom wall and an elastomeric strip having a U-shape in cross section, which is forcedly applied on the above peripheral rim.

The invention will be now further described in connection to embodiments thereof shown in the accompanying drawings, wherein:

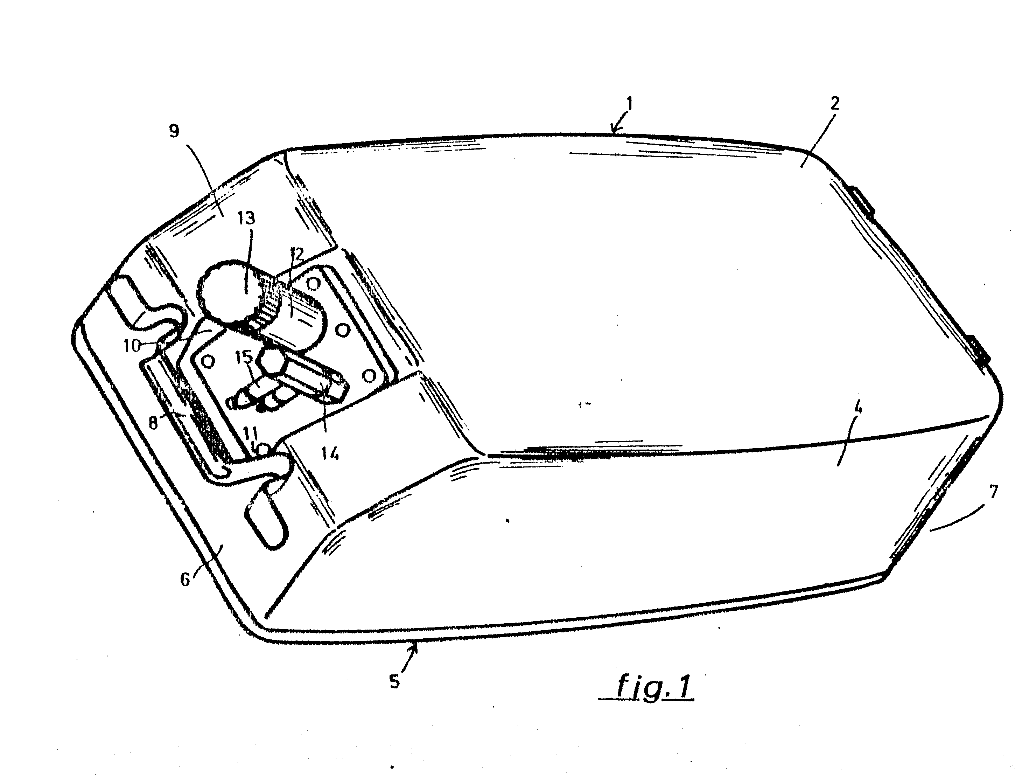

Fig.1 is a perspective view of the f-uel tank according to this invention, in a horizontal position.

Fig.2 is a partial perspective view of the rear portion of the fuel tank;

Fig.3 is a diagrammatic view showing the arrangement of the suction pipe within the fuel tank;

Fig.4 is a side elevational view showing the integral assembly of tank filler and fuel supply pipe of Fig.1;

Fig.5 is a plan view of the assembly shown in Fig.4, including also a fuel level gauge;

Fig.6 is a cross-sectional view taken through the bottom portion of fuel tank of Fig.1, with the bottom portion being provided with supporting and retaining means.

As can be seen from the drawings, the fuel tank generally designated by the reference numeral 1 has a structure substantially parallelepipedal in shape, comprising a slightly convex top wall 2, two side walls 3 and 4, a bottom wall 5, a front wall 6 and a rear wall 7.

Applied on the front wall 6 is a conventional transport handle 8, which is positioned in this location in order to make the transport by hand of the fuel tank 1 easier. The front wall 6 has an inclined portion 9 merging in the top wall 2 and in the inclined portion 9 a recess 10 is provided, the bottom 11 of which extends at an angle of about 45° to the tank bottom wall 5.

Applied on the bottom 11 of the recess 10 is a tank filler 12 provided with the closure cap 13, with the axis of this tank filler being perpendicular to the bottom 11 of recess 10 and also applied to this bottom 11 is a fuel supply pipe 14 provided with the conventional fitting 15 intended to receive the end of a hose the other end of which is to be connected to the outboard motor.

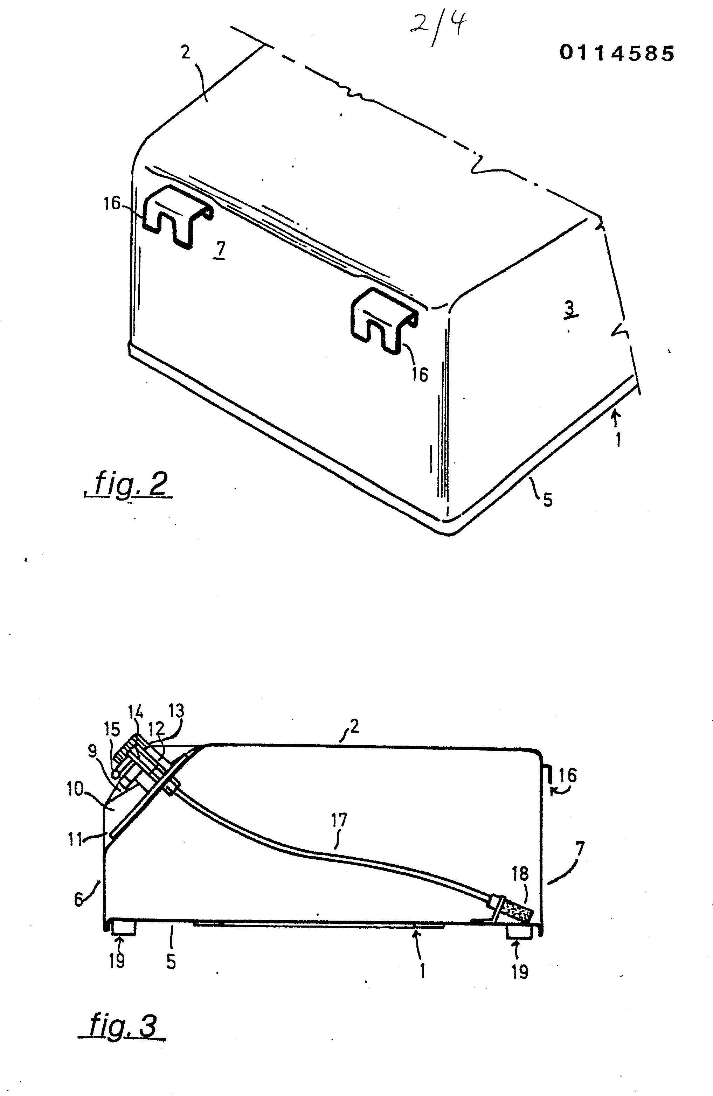

Fig. 2 shows the rear wall 7 of the fuel tank 1, which is provided with a pair of brackets 16 located near the top wall 2 and intended to hook the fuel tank 1 to a fixed portion of the hull in order to prevent dangerous movements of the f-uel tank due to hull movements. The brackets 16 are particularly useful to secure the fuel - tank in a suitable remote receptacle, because in this case the tank filler does not project beyond the tank top wall.

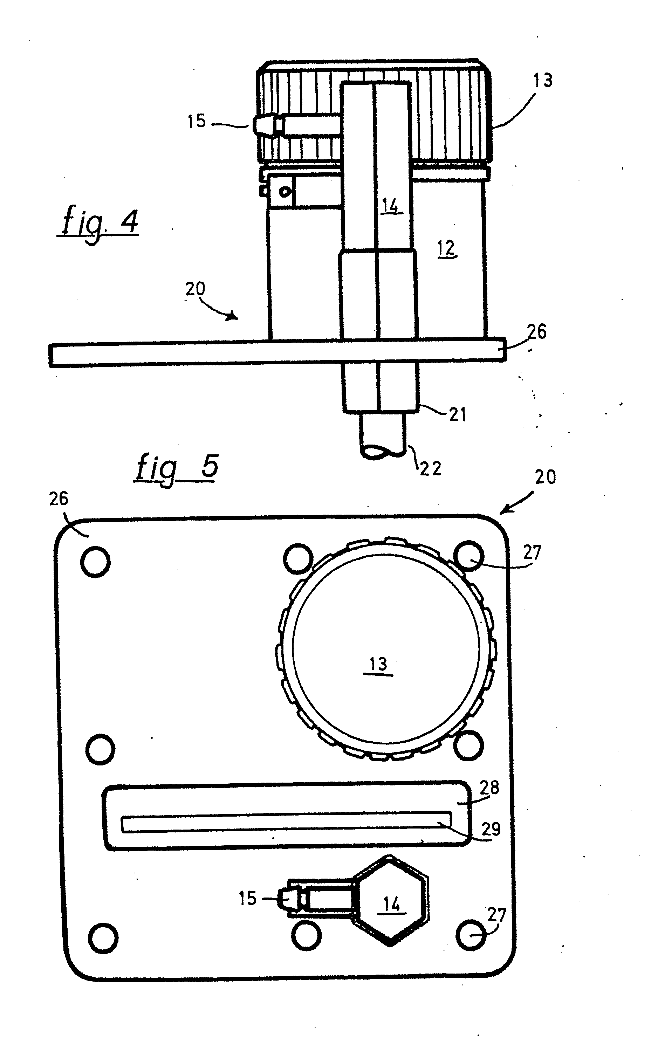

Fig. 3 illustrates the inside of the fuel tank 1 in order to show the arrangement of the suction pipe 17 extending into the fuel tank 1 up to a corner thereof opposite the corner to which the fuel supply pipe 14 is applied and having at the free end a fuel filter 18, which can be secured or not to the tank bottom wall. 19 designates feet for supporting the tank on the relevant hull portion.

Figs. 4 and 5 show an embodiment in which the tank filler 12 and the fuel supply pipe 14 are made as an integral assembly generally indicated by the reference numeral 20. This assembly is comprised of a substantially square shaped supporting plate 26 having holes 27 intended to secure it to the bottom 11 of the recess 10 provided in the fuel tank 1.

The supporting plate 26 is provided with the tank filler 12, the fuel supply pipe 14 and a seat 28 for housing a fuel level gauge 29, all these elements being integrally obtained in a single molding operation of a suitable plastic material .

On its lower surface the supporting plate 26 is provided with the conventional fitting 21 for connection of the suction pipe 17, with the axis of the fitting being aligned with the fuel supply pipe axis.

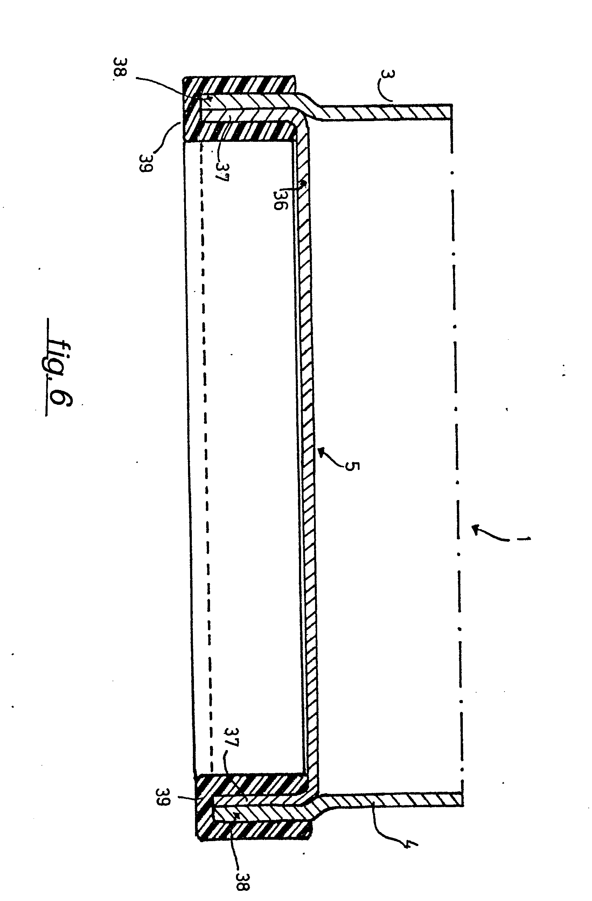

Fig.6 shows the embodiment wherein the bottom wall 5 comprises a reverse drawn portion 36 the side walls 37 of which are welded to the tank side walls so as to form a peripheral rim 38 depending from the tank bottom. Forcedly applied on this peripheral rim is a U-shaped strip 39 of elastomeric material, so that this strip 39 is positioned by this forced insertion and covers the peripheral rim 38 on all its extent.

The fuel tank just described is capable to resist the rolling and pitching movements of the hull since the friction coefficient of the elastomeric strip is choosen in such a manner as to prevent the fuel tank, particularly when it is in a full condition, from sliding on its supporting portion. Therefore, the possibility that the hull of the hull portion receiving the fuel tank is damaged by impacts of the latter against the hull is avoided.

Another advantage is that the above elastomeric strip can be easily applied on the depending peripheral tank rim for its substitution when it is worn.

From the foregoing it can be seen that the new portable fuel tank structure according to this invention offers the following advantages:

a) possibility of transporting the fuel tank in a vertical position by means of the handle since the filler is positioned close to the handle, preferably in an inclined position, so that there is no fuel leakage

- 7 -

through the filler cap when the fuel tank is filled with fuel.

b) possibility of transporting and filling the fuel tank both in a vertical and in a horizontal position, due to the fact that the filler is inclined with respect to the longitudinal axis of the tank.

c) possibility of transporting, filling and using the fuel tank both in a vertical and in a horizontal position due to the provision of the suction pipe arranged as above described.

d) possibility of securing the fuel tank in place by means of the brackets intended to engage relative hooking portions provided on the hull and capable of acting as supporting feet when the tank is in a vertical position.

e) protection of the tank filler by means of the transport handle since the filler is positioned near this handle and does not project therebeyond.

f) assurance of partial filling of the fuel tank in accordance with the existing specifications due to the correct location of the filler on the tank front wall.

g) possibility of applying the integral filler and fuel supply pipe assembly by providing in the tank an opening having a size suitable to cover the filler and fuel supply pipe openings.

h) possibility of manufacturing the f-uel tank already provided with the opening for applying the filler and fuel supply pipe assembly in a more suitable position.

i) possibility of obtaining the filler and fuel supply pipe assembly and possibly the fuel level gauge seat in a plastic material in a single molding operation,
with resulting remarkable savings in the manufacturing
costs of the fuel tank.

CLAIMS

1. Portable fuel tank structure for outboard motor having a transport handle located on a smaller side wall thereof, a filler and a fuel supply pipe, characterized in that said tank filler is positioned in a location close to the handle so as to permit the fuel tank to be transported, when in a full condition, in a vertical position without any fuel leakage through the filler cap.

2. Portable fuel tanl structure according to claim 1, characterized in that the tank filler is positioned in an inclined position with respect to the tank longitudinal axis in order to permit the fuel tank to be transported in a vertical position and to be filled both in a horizontal and a vertical positions.

3. Portable fuel tank structure according to claim 1, characterized in that also the fuel supply pipe is positioned close to the filler, preferably in a similarly inclined position, in order to permit the fuel tank to be transported, filled and used both in a horizontal position and in a vertical position.

4. Portable fuel tank structure according to claim 1, characterized in that the fuel supply pipe and the tank filler are integrally formed on a supporting plate as a separate assembly intended to be tightly secured on the tank wall and having means for securing it in a location of the fuel tank where an opening having such a size as to receive the filler and fuel pipe openings has been first provided.

- 1 -

5. Portable fuel tank structure according to claim 4, characterized in that said supporting plate is provided also with a seat for housing a fuel level gauge.

6. Portable fuel tank structure according to claims 4 and 5, characterized in that said filler and fuel supply pipe assembly is in a suitable plastic material and is integrally obtained in a single molding operation.

7. Portable fuel tank structure according to c-laims 1 and 2, characterized in that said fuel supply pipe is provided with a suction pipe extending inside the tank to reach a corner thereof opposite the corner where the fuel supply pipe is applied in order to drain as more as possible the fuel in the tank.

8. Portable fuel tank structure according to anyone of the preceding claims, characterized in that said fuel tank is provided with hooking means for securing it to the hull portion intended to receive it, so as to prevent dangerous movements thereof caused by the hull movements.

9. Portable fuel tank structure according to claim 8, characterized in that said hooking means comprise a pair of brackets applied on the tank rear wall and acting at the same time as supporting feet.

10. Portable fuel tank structure according to anyone of the preceding claims, characterized in that the fuel tank structure comprises a supporting and retaining means formed of a peripheral rim depending from the tank bottom wall and an elastomeric strip having a U-shape in cross section, which is forcedly applied on the above peripheral rim.

11. Portable fuel tank structure according to claim 10, characterized in that said elastomeric strip extends over all the lower peripheral rim of the tank so as to fully cover it and therefore to protect it against damages.

12. Portable fuel tank structure according to claim 10, characterized in that said tank peripheral rim is formed of a reverse drawn portion of said bottom wall, the sides of which are connected to said tank side walls, for example by welding.

fig.1

0114585

*fig. 2*

*fig. 3*

_fig. 4_

15
13
14
12
20
26
21
22

_fig. 5_

26
20
27
13
28
29
15
14
27

fig. 6